Europäisches Patentamt

European Patent Office

Office européen des brevets

(19)

(11) Veröffentlichungsnummer: **0 416 249 A1**

## (12) EUROPÄISCHE PATENTANMELDUNG

(21) Anmeldenummer: **90113453.6**

(22) Anmeldetag: **13.07.90**

(51) Int. Cl.5: **D01H 5/62**

(30) Priorität: **05.09.89 DE 3929490**

(43) Veröffentlichungstag der Anmeldung:
**13.03.91 Patentblatt 91/11**

(84) Benannte Vertragsstaaten:
**CH DE FR IT LI**

(71) Anmelder: **Zinser Textilmaschinen GmbH**
**Hans-Zinser-Strasse Postfach 1480**
**W-7333 Ebersbach/Fils(DE)**

(72) Erfinder: **Sautter, Gerhard, Dipl.-Ing.**
**Salacher Strasse 36**
**W-7332 Eislingen(DE)**

(54) **Verfahren und Vorrichtung zum taktweisen Abheben eines an einer bewegbar gelagerten Putzleiste angeordneten Abstreifelements.**

(57) Die Erfindung bezieht sich auf ein Verfahren und eine Vorrichtung zum taktweisen Abheben eines an einer bewegbar gelagerten Putzleiste 4 angeordneten, an eine zu reinigende Walze 3 angedrückten Abstreifelements 5 bei einer Reinigungsvorrichtung für Walzen und/oder Riemchen, insbesondere in Streckwerken, an einer Spinnereimaschine. Erfindungsgemäß wird die Putzleiste 4 pneumatisch beaufschlagt.

Fig. 1

## VERFAHREN UND VORRICHTUNG ZUM TAKTWEISEN ABHEBEN EINES AN EINER BEWEGBAR GELAGERTEN PUTZLEISTE ANGEORDNETEN ABSTREIFELEMENTS

Die Erfindung bezieht sich auf ein Verfahren und eine Vorrichtung zum taktweisen Abheben eines an einer bewegbar gelagerten Putzleiste angeordneten, an ein zu reinigendes Verzugsorgan angedrückten Abstreifelements bei einer Reinigungsvorrichtung für Streckwerke, an einer Spinnereimaschine.

Als Stand der Technik ist bereits eine derartige Putzvorrichtung zum Reinigen von Streckwalzen an Spinnereimaschinen bekannt (DE-OS 1 510 483). Hierbei findet ein schlauchförmiges Abstreiforgan aus elastischem Material Anwendung, welches in Schwingung versetzt und dabei häufig kurzzeitig von der abzustreifenden Walze abgehoben wird. Zur Erzeugung dieser Bewegungen ist ein erheblicher konstruktiver Aufwand erforderlich.

Auch bei einer anderen bekannten Reinigungsvorrichtung, welche ebenfalls als Abstreifelement einen elastisch deformierbaren Schlauch einsetzt, werden mit großem konstruktivem Aufwand die Schwingungen zur Durchführung des Reinigungsvorgangs erzeugt (DE-AS 1 510 719).

Weitere bekannte Reinigungsvorrichtungen setzen Nockengetriebe (DE-AS 1 266 190) bzw. andere mechanische, elektromagnetische, hydraulische oder pneumatische Steuerungen ein (DE-AS 1 130 336; AT-PS 195 809).

Demgegenüber liegt der vorliegenden Erfindung die Aufgabe zugrunde, ein Verfahren bzw. eine Vorrichtung der eingangs genann ten Art so auszubilden, daß eine einfache, jedoch vielseitige Anwendungsmöglichkeit gegeben ist.

Diese Aufgabe wird erfindungsgemäß dadurch gelöst, daß die Putzleiste pneumatisch beaufschlagt wird. Es ergibt sich hiermit eine sehr einfache Bauform, welche vorteilhafterweise an jeder Maschine nachrüstbar eingesetzt werden kann. Durch die pneumatische Beaufschlagung der Putzleiste sind die Reinigungsintervalle variabel einstellbar, wobei das Abheben bzw. die Reinigung der Putzleiste in einem Arbeitsgang erfolgen kann.

In weiterer Ausgestaltung der Erfindung kann die Putzleiste durch Druckluft zum Abheben beaufschlagt werden. Hierbei kann eine Führung der abströmenden Luft durchgeführt werden, durch die die abströmende Luft Ablagerungen am Abstreifelement ablöst. Die Putzleiste kann im Bereich ihrer Lagerstellen beaufschlagt werden, so daß eine erhebliche Vereinfachung in der Bauform erzielt wird.

Bei einer Vorrichtung zur Durchführung des erfindungsgemäßen Verfahrens kann eine feder bzw. gewichtsbelastete Putzleiste Anwendung finden, wobei die Putzleiste mindestens eine zu ihrer Bewegungsrichtung im wesentlichen senkrechte Prallfläche aufweist, gegen welche die Mündung mindestens einer durch ein steuerbares Ventil taktweise mit Druckluft beaufschlagbare Blasdüse gerichtet ist. Darüber hinaus kann die Prallfläche Luftleitflächen aufweisen, durch welche die aus der Blasdüse austretende Luft über das Abstreifelement geführt wird. Damit wird, wie vorstehend ausgeführt, in einem Arbeitsgang ein Abheben bzw. Reinigen der Putzleiste gewährleistet.

Nach einem weiteren Merkmal der Erfindung ist die Zuleitung zur Blasdüse mit einem Steuerventil und das Steuerventil mit einem Zeitmeßglied verbunden, so daß hierdurch die Reinigungsintervalle variabel eingestellt werden können.

Zum Entfernen der an der Putzleiste liegenden Ablagerungen kann im Bereich der Putzleiste eine Absaugvorrichtung angeordnet sein, welche sich vorteilhafterweise über die gesamte Länge der Putzleiste erstrecken kann.

Die Erfindung wird nachfolgend anhand von in der Zeichnung dargestellten Ausführungsbeispielen näher beschrieben. In der Zeichnung zeigen:

Fig. 1 eine schematische Seitenansicht einer ersten Ausführungsform der erfindungsgemäßen Reinigungsvorrichtung;

Fig. 2 eine Draufsicht auf die Ausführungsform nach Fig. 1 mit entfernter Oberwalze;

Fig. 3, 4 und 5 drei verschiedene Ausführungsformen der Erfindung, jeweils in schematischer Vorderansicht.

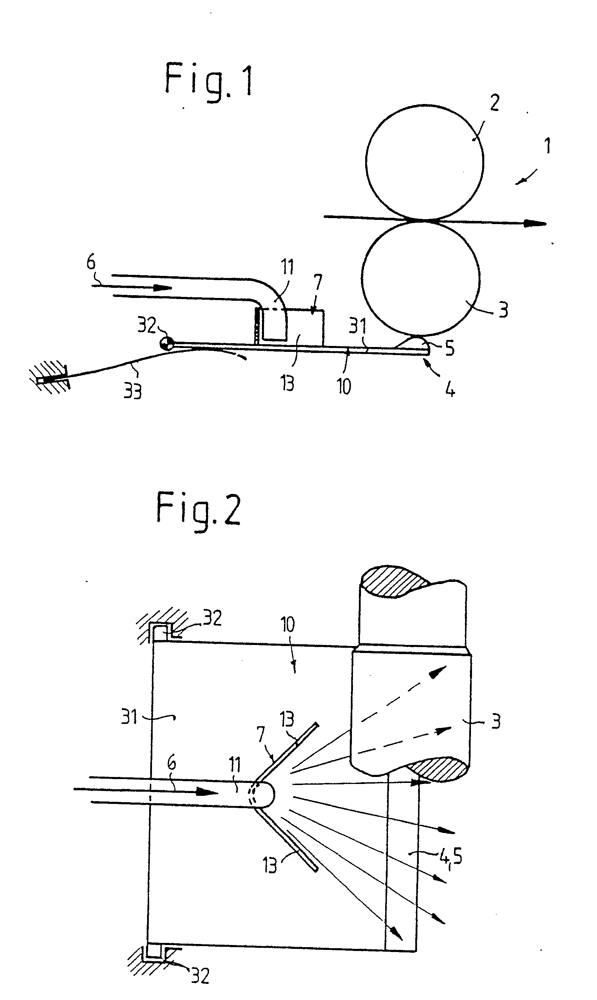

Nach Fig. 1 ist unterhalb eines Walzenpaares 1, bestehend aus Oberwalze 2 und Unterwalze 3 eines Streckwerks an einer Spinnereimaschine eine Reinigungsvorrichtung angeordnet. Diese Reinigungsvorrichtung besteht aus einer Putzleiste 4 mit einem Abstreifelement 5, welches an der zu reinigenden Unterwalze 3 angedrückt wird. Die Putzleiste 4 ist an einer Platte 31 befestigt, welche in Lagern 32 gemäß Fig. 2 gelagert ist. Die Oberseite dieser Platte 31 dient als Prallfläche 10, auf welche Blasluft 6, die durch eine Blasdüse 11 geführt wird, auftrifft. Unterhalb der Platte 31 befindet sich eine Feder 33, welche die Putzleiste 4 mit dem Abstreifelement 5 gegen die Unterwalze 3 drückt. Wird nun Blasluft 6 periodisch durch die Mündung der Blasdüse 11 gedrückt, so wird die Platte 31 gegen Wirkung der Feder 33 um die Lagerung 32 bewegt, wodurch im entsprechenden periodischen Intervall das Abstreifelement 5 bzw. die Putzleiste 4 von der Unterwalze 3 abgehoben wird. Hierdurch werden uner wünschte Ablagerungen bzw. Kurzfasern im Klemmbereich zwischen dem Abstreifelement 5 und der Unterwalze 3 freigegeben.

Die Platte 31 ist im oberen Bereich mit einer Führung 7 in Form von Luftleitblechen 13 versehen, welche gemäß Fig. 2 unterhalb des Austrittsendes der Blasdüse 11 konisch verlaufen. Hierdurch wird der Luftstrom gemäß Fig. 2 in Pfeilrichtung gebündelt und über das abgehobene Abstreifelement 5 geführt, wodurch die vorgenannten unerwünschten Ablagerungen bzw. Kurzfasern aus dem Klemmbereich zwischen dem Abstreifelement 5 und der Unterwalze 3 entfernt werden.

Durch die pneumatische Beaufschlagung der Putzleiste 4 erfolgt das Abheben und Reinigen des Abstreifelements 5 in einem Arbeitsgang. Es liegt eine sehr einfache Ausführungsform vor, welche an jeder Maschine nachrüstbar angebracht werden kann. Die Reinigungsintervalle der Blasluft 6 sind variabel in an sich bekannter Weise einstellbar, wobei ebenfalls entsprechend dem Druck der Blasluft 6 die Hubhöhe variabel gestaltet sein kann.

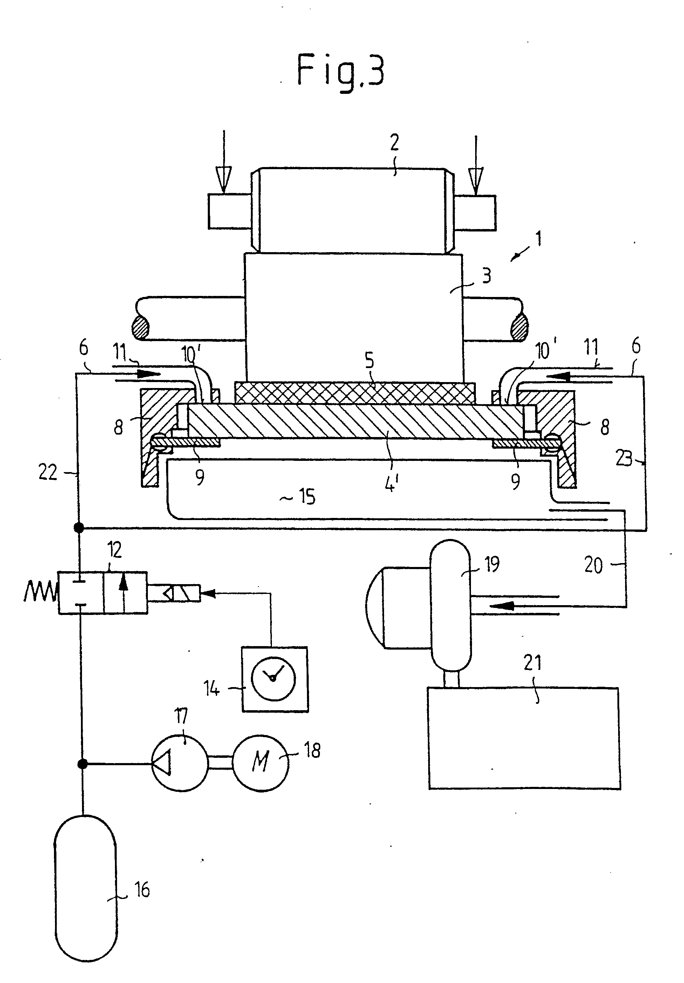

Bei der Ausführungsform nach Fig. 3 erfolgt eine Beaufschlagung der Putzleiste 4' im Bereich ihrer Lagerstellen 8. Hierbei ist die Putzleiste 4' wiederum im oberen Bereich mit dem Abstreifelement 5 versehen, welches gegen die Unterwalze 3 des Streckwerkspaares 1 anliegt. Im Bereich der Lagerstellen 8 ist die Putzleiste jeweils unterseitig von einem Federelement 9 beaufschlagt, welches die Putzleiste 4' nach oben drückt. Beide Lagerstellen 8 und 8' sind jeweils mit einer Blasluftdüse 11 ausgerüstet, wodurch Blasluft 6 auf die Putzleiste 4' einwirken kann und damit das Abheben dieser Putzleiste und des Abstreifelements 5 von der Unterwalze 3 bewirkt.

Die beiden Blasdüsen 11 sind über Leitungen 22 und 23 mit einem Ventil 12 verbunden, welches seinerseits mit einem Speicher 16, einer Pumpe 17 sowie einem Motor 18 in Verbindung steht. Das Ventil 12 wird von einem Zeitmeßglied 14 gesteuert. Hierbei tritt jeweils im gewünschter Intervall Blasluft 6 über das Ventil 12 in die Blasdüsen 11 und beaufschlagt damit die Putzleiste 4' von oben im Bereich der Lagerstellen gegen Wirkung der Federelemente 9. Dadurch erfolgt ein Abheben des Abstreifelements 5 von der Unterwalze 3, wobei die freiwerdende Blasluft über die Putzleiste 4' gelangt und damit Ablagerungen am Abstreifelement 5 ablöst.

Unterhalb der Putzleiste 4' befindet sich eine Absaugvorrichtung 15, welche sich vorteilhafterweise über die ganze Länge dieser Putzleiste erstreckt. Die vorgenannten, vom Abstreifelement 5 mit Hilfe der Blasluft gelösten Ablagerungen werden in der Absaugvorrichtung 15 gesammelt und über eine Leitung 20 sowie mit Hilfe eines Absaugaggregates 19 in einer Deponie 21 abgelagert.

Auch bei dieser Ausführungsform erfolgt das Abheben bzw. die Reinigung der Putzleiste 4' und des Abstreifelements 5 in einem Arbeitsgang, wobei sowohl die Einstellung der Reinigungsintervalle über das Zeitmeßglied 14 und die Hubhöhe durch Dosierung der Blasluft 6 variabel gestaltet sein können.

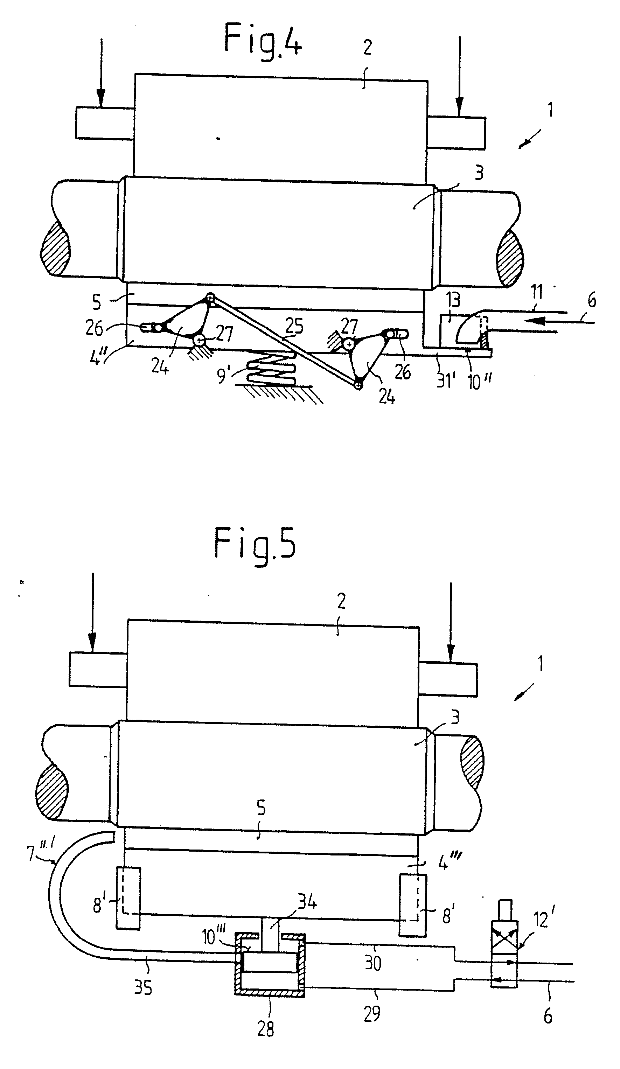

Bei der Ausführungsform nach Fig. 4 ist die Putzleiste 4'' mit einer Geradführung verbunden. Diese Geradführung besteht aus zwei Winkelhebeln 24, welche jeweils gehäusefest im Lagerpunkt 27 angeordnet und durch einen Hebel 25 miteinander verbunden sind. Das jeweils andere Gelenk des Winkelhebels 24 ist in einer Geradführung 26 der Putzleiste 4'' geführt. Im unteren Bereich wird diese Putzleiste von einem Federelement 9' beaufschlagt. Durch diese Gestaltung wird mit Hilfe der Winkelhebel 24, 24 eine einwandfreie Geradführung der Putzleiste 4'' bewirkt, welche oberseitig wiederum mit dem Abstreifelement 5 versehen ist, das an der Unterwalze 3 des Streckwerkswalzenpaares 1 anliegt.

Auf der rechten Seite ist die Putzwalze 4'' wiederum mit einer Platte 31' versehen, welche eine Prallfläche 10'' für die austretende Blasluft 6 bildet. Diese Blasluft 6 wird durch eine Blas düse 11 geführt, wobei die Mündung der Blasdüse 11 analog der Bauform nach Fig.1 von Luftleitflächen 13 umgeben ist, um die aus der Blasdüse 11 austretende Blasluft 6 nach Abheben des Abstreifelements 5 von der Unterwalze 3 zum Abblasen der abgelagerten Abfälle bzw. Kurzfasern zu verwenden.

Bei der Ausführungsform nach Fig. 5 findet eine Kolbenzylindereinheit 28 Anwendung, welche beidseitig über die Leitungen 29 und 30 beaufschlagbar sind. Diese Leitungen stehen mit einem Steuerventil 12' in Verbindung. Die Kolbenstange 34 des Kolbens der Kolbenzylindereinheit 28 ist mit der Unterseite der Putzleiste 4''' verbunden, welche oberseitig wiederum mit dem Abstreifelement 5 ausgestattet ist.

Die Oberseite des Kolbens der Kolbenzylindereinheit 28 bildet wiederum eine Prallfläche 10''', so daß über die Leitung 30 eintretende Luft ein Abheben der Putzleiste und des Abstreifelements 5 von der Unterwalze 3 bewirkt. Diese, über die Leitung 30 strömende Luft wird gleichzeitig über die Leitung 35 weitergeführt, welche als Führung 7' für Blasluft dient, welche Abfälle und Kurzfasern nach Abheben des Abstreifelements 5 von der Unterwalze 3 entfernt.

Nach Umsteuern des Steuerelements 12' in die in Fig. 5 dargestellte Situation wird die Putzleiste 4''' und damit das Abstreifelement 5 wiederum gegen die Unterwalze 3 gedrückt und kann seine Abstreiffunktion durchführen. Auch hier liegt eine einfache Bauform vor, welche an jeder Maschine nachträglich einsetzbar ist, wobei über das Ventil 12' die Reinigungsintervalle sowie die Hubhöhe variabel einstellbar sind. Durch die Kolbenzylindereinheit 28 und die Leitung 35 erfolgt das Abheben bzw. die Reinigung des Abstreifelements 5 der Putzleiste 4′ in einem Arbeitsgang. Diese Putzleiste 4‴ ist wiederum in Lagerstellen 8′ geführt, so daß eine einwandfreie Geradführung gegeben ist.

## Ansprüche

1. Verfahren zum taktweisen Abheben eines an einer bewegbar gelagerten Putzleiste angeordneten, an ein zu reinigendes Verzugsorgan angedrückten Abstreifelements bei einer Reinigungsvorrichtung für Streckwerke, an einer Spinnereimaschine, dadurch gekennzeichnet, daß die Putzleiste (4, 4′, 4″, 4‴) pneumatisch beaufschlagt wird.

2. Verfahren nach Anspruch 1, dadurch gekennzeichnet, daß die Putzleiste (4, 4′, 4″, 4‴) durch Druckluft (6) zum Abheben beaufschlagt wird.

3. Verfahren nach Anspruch 1 oder 2, gekennzeichnet durch eine Führung (7, 7′) der abströmenden Luft, durch die die abströmende Luft Ablagerungen am Abstreifelement (5) ablöst.

4. Verfahren nach Anspruch 1, gekennzeichnet durch Beaufschlagung der Putzleiste (4′) im Bereich ihrer Lagerstellen (8).

5. Vorrichtung zur Durchführung des Verfahrens nach einem oder mehreren der Ansprüche 1 bis 4, mit feder- oder gewichtsbelasteter Putzleiste, dadurch gekennzeichnet, daß die Putzleiste (4, 4′, 4″) mindestens eine zu ihrer Bewegungsrichtung im wesentlichen senkrechte Prallfläche (10, 10′, 10″) aufweist, gegen welche die Mündung mindestens einer durch ein steuerbares Ventil (12) taktweise mit Druckluft (6) beaufschlagbaren Blasdüse (11) gerichtet ist.

6. Vorrichtung nach Anspruch 5, dadurch gekennzeichnet, daß die Prallfläche (10) Luftleitflächen (13) aufweist, durch welche die aus der Blasdüse (11) austretende Luft (6) über das Abstreifelement (5) geführt wird.

7. Vorrichtung nach Anspruch 5, dadurch gekennzeichnet, daß die Zuleitung zur Blasdüse (11) mit einem Steuerventil (12, 12′) und das Steuerventil (12, 12′) mit einem Zeitmeßglied (14) verbunden ist.

8. Vorrichtung nach Anspruch 5, dadurch gekennzeichnet, daß im Bereich der Putzleiste (4, 4′, 4″, 4‴) eine Absaugvorrichtung (15) angeordnet ist.

9. Vorrichtung nach Anspruch 8, dadurch gekennzeichnet, daß sich die Absaugvorrichtung (15) über die ganze Länge der Putzleiste (4, 4′, 4″, 4‴)-erstreckt.

# Fig.1

# Fig.2

# Fig.3

# Fig.4

# Fig.5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,D | DE-B-1 130 336   (FERDINAND REITERER UND LOUIS WINDISCH)<br>* Spalte 3, Zeilen 11-15; Ansprüche 1-12; Figuren 1-9 *<br>– – – | 1,2,4 | D 01 H 5/62 |
| Y,D | | 3,5 | |
| A,D | | 6-9 | |
| Y | GB-A-1 041 164   (LUWA AG)<br>* Seite 1, Zeilen 46-54,75-84; Seite 2, Zeilen 1-7,50-61; Ansprüche 1,2; Figur 1 *<br>– – – | 3,5 | |
| A | | 6-9 | |
| A,D | DE-B-1 266 190   (DEUTSCHER SPINNEREIMASCHINEN-BAU INGOLSTADT)<br>– – – – – | | |

| RECHERCHIERTE SACHGEBIETE (Int. Cl.5) |
|---|
| D 01 H<br>B 65 H |

**Der vorliegende Recherchenbericht wurde für alle Patentansprüche erstellt**

| Recherchenort | Abschlußdatum der Recherche | Prüfer |
|---|---|---|
| Den Haag | 16 November 90 | TAMME H.-M.N. |